# EUROPEAN PATENT APPLICATION

(11) **EP 0 668 545 A2**
(43) Date of publication of application: **23.08.1995**
(21) Application number: 95300914.9
(22) Date of filing: 14.02.1995
(51) Int. Cl.: G03G 15/00, F16C 11/04, F16C 33/08

(54) **Composite flanged bearing having anti-rotation feature**

(30) Priority: 18.02.1994 US 198721
(71) Applicant: XEROX CORPORATION, Rochester New York 14644 (US)
(72) Inventor: Coleman, Raymond C., Webster, NY 14580 (US)
(74) Representative: Reynolds, Julian David

(57) **Abstract**

A bearing or bushing (150) for supporting a rotating shaft (not shown) in a thin walled frame (140) of an electrophotographic printing machine. The composite bearing has a flange (152) at one end and is adapted to be inserted in an opening (142) in a wall (140) until the flange (152) abuts the surface of the wall. A protruding tab (154) formed by displacing a small portion of the flange (152) extends in an axial direction and cooperates with a corresponding opening (146) in the wall to prevent rotation of the bearing (150) relative to the wall (140). The protruding tab prevents the bearing from rotating about its axis (144) which can cause the bearing to be worn on the exterior surface by rotational contact with the wall (140). In another embodiment, the protruding tab (164; Figs. 3,4) comprises a projection formed integrally with the flange. A snap ring (176) is attached to the bearing (150), by slotting into a groove (158), on the side of the wall opposite the flange, and prevents axial movement of the bearing. In another embodiment, a push nut (170; Fig. 2B), which frictionally engages the outer surface of the bearing (150), is used to prevent axial movement thereof.

## Description

This invention relates generally to sleeve-type plain bearings or bushings and more particularly concerns a flanged cylindrical bearing suitable for mounting in a thin walled panel and incorporating an anti-rotation or anti-spin feature.

Conventional composite flanged bearings are designed to be pressed into housings to prevent rotation of the bearings and to provide support.

In modern printing machines such as electrophotographic printing machines, it is increasingly desirable to develop lighter materials for the framework of the machines. Accordingly, many modern machines utilize a fabricated sheet metal frame, resulting in relatively thin walled support structures. Throughout a typical printing machine, many shafts are utilised, usually to support idler rollers, drive rollers and other rotating parts, and such shafts are suitably supported in contact with a low pressure velocity coefficient bearing surface such as that provided by typical flanged bearings. However, due to the requirement that such flanged bearings be press fit into a housing to prevent rotation thereof, this type of bearing is unsuitable for use in a structure or frame having thin walls. If a conventional flanged bearing is pressed into the thin wall structure, the bearing tends to spin within the opening which results in quick degradation of the bearing due to the thin wall support cutting through to the inner bearing surface of the bearing.

There is therefore a need for a low pressure velocity flanged bearing which can be utilized in a thin wall frame or support structure while still providing high durability.

US-A-4,804,277 describes a bearing mounting system for mounting and retaining a rotatable shaft between first and second bearings mounted to first and second frame members. A first bearing mount rigidly secures a first bearing outer race to a first frame member. A second mount allows axial movement of the second bearing outer race relative to the second frame member but does not allow rotational movement.

US-A-4,134,175 discloses a non-rotating sleeve-type bushing in which an eccentric flange integral with the bushing and projecting radially outward therefrom is formed so as to be received in a complimentary contoured flanged recess in a bearing housing whereby rotation of the bushing with respect to the bearing housing is precluded.

In accordance with one aspect of the present invention, there is provided a bearing, mounted in a wall, for supporting a rotatable shaft, comprising: a cylindrical main body, adapted to be inserted into an opening in the wall and having an axial bore therethrough for supporting the shaft; an annular flange integral with said main body, said flange abutting the wall; and an anti-rotation device, integral with said flange and cooperating with the wall to prevent rotation of the bearing relative to the wall.

An advantage of the bearing described herein is that it is easily mounted and can be replaced without the necessity of complex disassembly of many components. The anti-rotation device prevents the bearing from rotating about its axis, and therefore prevents the bearing from being worn (eventually to the point of failure) through rotational contact with the thin wall. Furthermore, the provision of the anti-rotation feature obviates the need for a tight press fit of the bearing in the thin wall.

Pursuant to another aspect of the present invention, there is provided an electrophotographic printing machine having a frame constructed of a thin walled member, and a bearing adapted to support a shaft adapted to rotate. The bearing comprises a cylindrical main body, adapted to be inserted into an opening in the thin wall, defining an axial bore therethrough for supporting the shaft and an annular flange integral with a first end of said main body, said flange abutting the thin wall. An anti-rotation device, integral with said flange, cooperating with the thin wall to prevent rotation of the bearing is also provided.

Other features of the present invention will become apparent as the following description proceeds and upon reference to the drawings, in which:
Figure 1 is a is a front elevational view of the mounting arrangement for the bearing according to a first embodiment of the present invention;
Figure 2 is a side elevational view of the arrangement of Figure 1 in (A) a first, and (B) a second, embodiment of the invention;
Figure 3 is a front elevational view of a mounting arrangement for a bearing according to a third embodiment of the invention;
Figure 4 is an elevational view of the arrangement of Figure 3; and
Figure 5 is a schematic elevational view of a typical electrophotographic printing machine in which the bearing arrangement of any of Figures 1 to 4 may be used.

For a general understanding of the features of the present invention, reference is made to the drawings. In the drawings, like reference numerals have been used throughout to identify identical elements unless indicated otherwise.

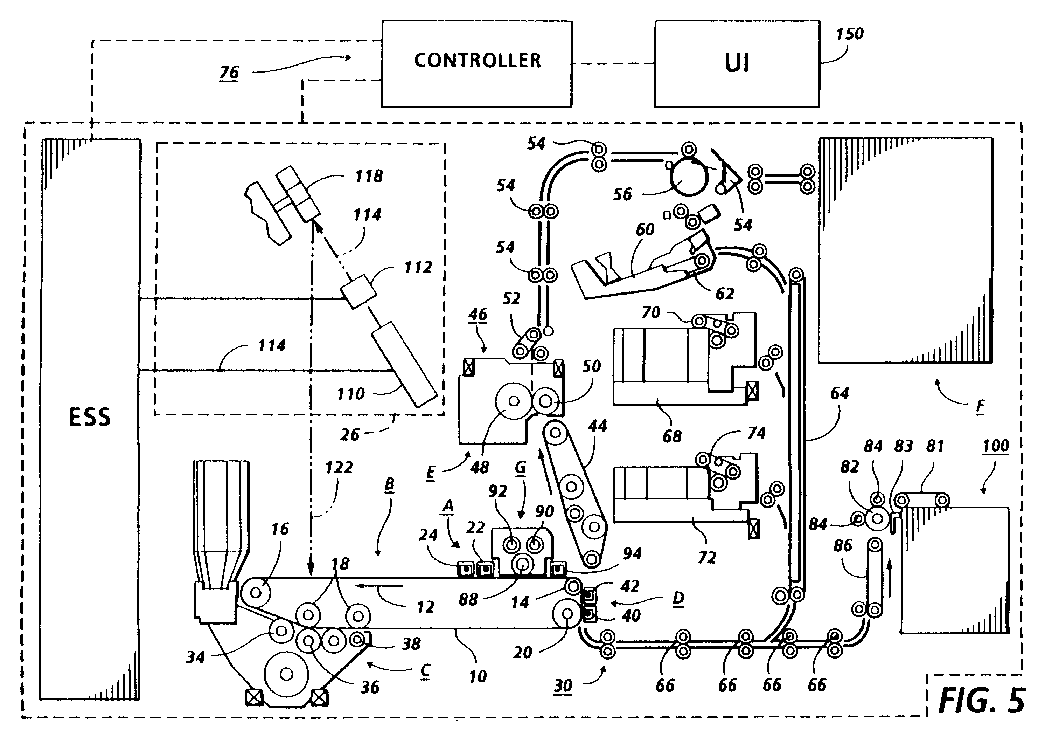

Referring initially to Fig. 5 of the drawings, an electrophotographic printing machine in which the present invention may be used is illustrated schematically: the bearing may be used to support, for example, any of rollers 12-20, 54, 66 and 84 in the thin-walled internal frame of the machine. The printing machine of Fig. 5 is well known in the art, and a detailed description thereof has therefore been omitted from the present disclosure. For further details, reference is made to U.S. application S.N. 08/198,721, a copy of which was filed with the present application.

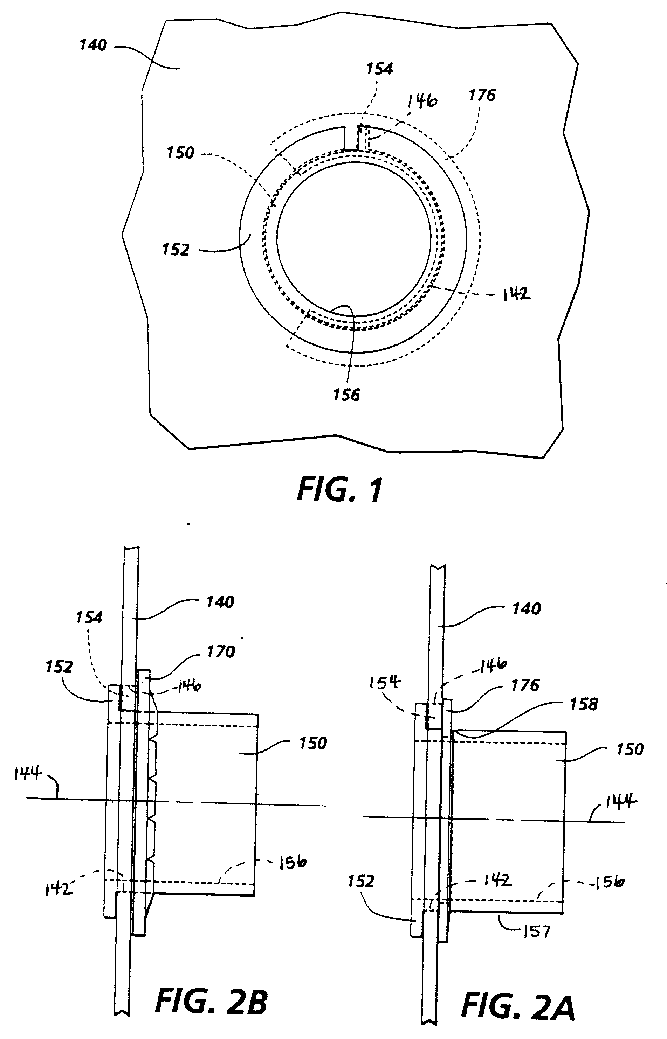

Turning now to Figure 1, there is illustrated a partial cut-away view of the printing machine of Figure 5 illustrating a bearing according to the present invention secured to a thin wall 140 consistuting one planar frame member of the machine. Figure 2A is a side elevational view of the arrangement of Fig. 1, illustrating a first embodiment of the invention.

Referring to Figures 1 and 2A, the bearing is a generally cylindrical shaped member 150 having an annular flange 152 located at one end of the cylindrical portion. The bearing 150 has an internal bore 156 which supports a rotating shaft (not shown) which may be used for idler rollers, drive rollers, belt rollers (labelled variously 12-20, 54, 66 and 84 in Fig. 5) or any other use for a rotating shaft within a printing machine. Typically, the bearing is of a composite construction which typically consists of several layers: the outer backing layer may be of a steel or bronze material, a second layer is typically made of a bronze and a third, internal, sliding layer composed of a material such as polytetrafluoroethylene (PTFE) and/or lead (Pb) so as to provide an internal bearing surface with a relatively low coefficient of friction. During mounting, bearing 150 is inserted (left to right in Fig. 2A) into a circular aperture 142 in the thin wall 140 until the annular flange 152 abuts one surface of the wall 140. A rotation restraining tab 154 is formed by making an "L" shaped cut in the flange 152 and then bending a portion of the annular flange 152 through 90° so that it extends in a direction parallel to the axis 144 of the bearing 150. This tab 154 cooperates with a slot 146 or other opening in the wall 140 to prevent the bearing 150 from rotating, relative to the wall 140, about the axis 144. To maintain the flange 152 flush with the wall 140, a retaining member in the form of a snap ring 176 may be used.

A groove 158 is formed in the outer surface 157 of the bearing 150. The groove 158 is located so that a snap ring 176 is inserted (snap fitted) into the groove 158 after the bearing has been fully inserted into the aperture 142 in the wall 140. The snap ring 176 then prevents the bearing 150 from moving axially toward the surface of the wall 140 opposite the flange 152. The bearing 150 can also be held in place by a feature such as an E-ring on the shaft which is inserted into the bearing or by a stepped portion formed into the shaft.

Fig. 28 illustrates a second embodiment of the invention, in which a push nut 170 is used as a retaining member in place of snap ring 176. The construction is exactly the same as the first embodiment, except that the groove 158 is omitted. The push nut 170 is inserted over the bearing 150 until it abuts the side of the wall 140 opposite the flange 152, so as to secure the bearing into the wall 140.

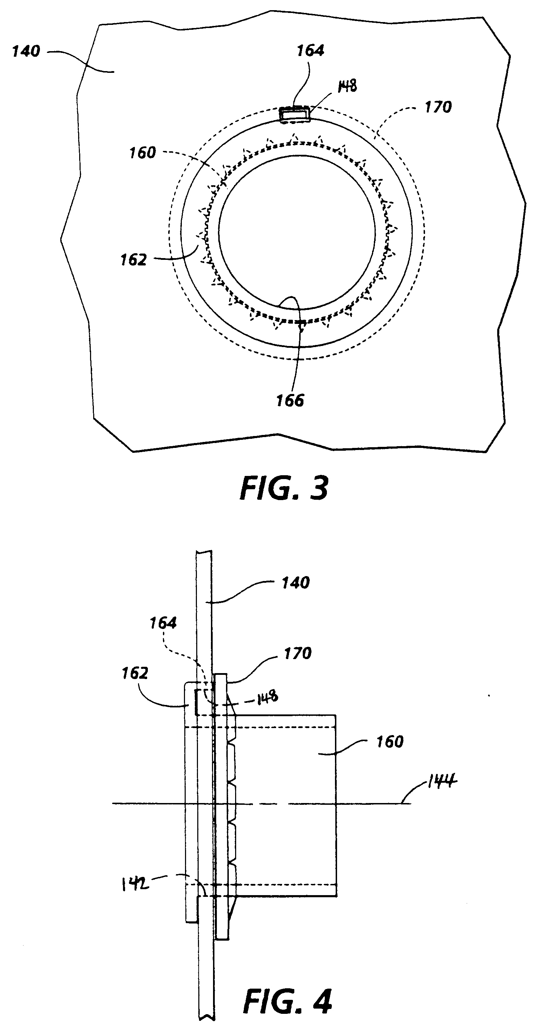

A third embodiment of the invention is illustrated in Figures 3 and 4. This is exactly the same as the second embodiment, except that the rotation preventing tab 164 is a projection integral with, and extending outwardly from, the annular flange 162 in a direction parallel to the axis 144 of the bearing 160. The tab 164 serves to prevent rotation of the bearing 160 about an axis 144 in the same manner as in the first and second embodiments discussed above.

## Claims

1. A bearing (150,160), mounted in a wall (140), for supporting a rotatable shaft, comprising:
a cylindrical main body, adapted to be inserted into an opening (142) in the wall (140) and having an axial bore (156) therethrough for supporting the shaft;
an annular flange (152;162) integral with said main body, said flange abutting the wall (140); and
an anti-rotation device (154; 164), integral with said flange (152; 162) and cooperating with the wall (140) to prevent rotation of the bearing relative to the wall.

2. A bearing according to Claim 1, wherein the wall (140) has an aperture (146;148) therein, and said anti-rotation device (154,164) comprises tab engagable with said aperture (146; 148).

3. A bearing according to Claim 2, wherein the tab comprises a deformed portion (154) of said flange (152).

4. A bearing according to Claim 1, 2 or 3, further comprising a locking member, engagable with the bearing (150;160) to secure the bearing to the wall and prevent axial movement of the bearing.

5. A bearing according to Claim 4, wherein said locking member (170;176) comprises a push nut (170) slidable over said main body and frictionally engagable therewith.

6. A bearing according to Claim 4, wherein said main body includes a circumferential groove (158) in the external surface thereof, and said locking member (176) engages the groove.

7. A bearing according to Claim 6, wherein said locking member (176) comprises a snap ring.

8. An electrophotographic printing machine comprising a frame having one or more walls (140), and a bearing (150; 160) according to any of claims 1 to 7.
